# EUROPÄISCHE PATENTSCHRIFT

(11) **EP 1 232 561 B1**
(45) Veröffentlichungstag und Bekanntmachung des Hinweises auf die Patenterteilung: **01.10.2008**
(21) Anmeldenummer: 00988615.1
(22) Anmeldetag: 15.11.2000
(51) Int. Cl.: H02P 6/22

(54) **VERFAHREN ZUM ANFAHREN EINES SENSOR- UND BÜRSTENLOSEN GLEICHSTROMMOTORS**
METHOD FOR STARTING A SENSOR- AND BRUSHLESS D.C. MOTOR
PROCEDE DE DEMARRAGE D'UN MOTEUR A COURANT CONTINU SANS DETECTEUR NI BALAI

(30) Priorität: 17.11.1999 DE 19955247
(43) Veröffentlichungstag der Anmeldung: 21.08.2002
(73) Patentinhaber: ROBERT BOSCH GMBH, 70442 Stuttgart (DE)
(72) Erfinder: KRAUTH, Wolfgang, 77855 Achern-Sasbachried (DE); SCHWENK, Wolfgang, Farmington Hills, MI 48331 (US)
(86) Internationale Anmeldenummer: PCT/DE2000/004026
(87) Internationale Veröffentlichungsnummer: WO 2001/037420

(56) Entgegenhaltungen:
- FR-A- 2 590 423
- US-A- 5 198 733
- US-A- 5 350 984
- US-A- 5 466 999
- PATENT ABSTRACTS OF JAPAN vol. 14, no. 108 (E-896), 27. Februar 1990 (1990-02-27) -& JP 01 308192 A (FUJITSU GENERAL LTD), 12. Dezember 1989 (1989-12-12)
- PATENT ABSTRACTS OF JAPAN vol. 1999, no. 14, 22. Dezember 1999 (1999-12-22) -& JP 11 243698 A (MATSUSHITA SEIKO CO LTD), 7. September 1999 (1999-09-07)
- PATENT ABSTRACTS OF JAPAN vol. 2000, no. 7, 29. September 2000 (2000-09-29) -& JP 2000 104981 A (MATSUSHITA ELECTRIC IND CO LTD), 11. April 2000 (2000-04-11)

## Beschreibung

### Stand der Technik

Die Erfindung geht aus von einem Verfahren zum Anfahren eines sensor- und bürstenlosen Gleichstrommotors, dessen Ständerwicklungen von einer mehrphasigen Umrichterschaltung gespeist werden, der im Oberbegriff des Anspruchs 1 definierten Gattung.

In der DE 39 40 568.9 A1 ist eine Schaltungsanordnung zum Betreiben eines Mehrphasen-Synchronmotors an einem Gleichstromnetz beschrieben. Dabei werden die Phasen sukzessive an die Gleichspannung angeschlossen und Kommutierungsschalter entsprechend der Rotorstellung so gesteuert, dass sie zur Kommutierung aufeinanderfolgender Phasen zeitlich überlappen und mindestens einer der Kommutierungsschalter im Kommutierungsbereich derart getaktet wird, dass der Mittelwert des Stromes in der aufkommutierenden Phase zu- und in der abkommutierenden Phase abnimmt. Durch diese Überlappung und Taktung der Schaltsignale in den Kommutierungsflanken wird ein geringerer Schaltverlust und eine Geräuschreduzierung erreicht.

Die Position des Rotors eines sensorlosen und bürstenlosen Gleichstrommotors ist im Stillstand rein zufällig und kann nicht ermittelt werden. Eine Möglichkeit, um einen solchen sensor- und bürstenlosen Gleichstrommotor anlaufen zu lassen, besteht darin, dass ein Ständerdrehfeld mittels eines Startoszillators aufgezwungen wird. Die Frequenz des Ständerdrehfeldes muss dabei so angepasst sein, dass sich der Läufer mit seiner Massenträgheit in einem definierten Zeitintervall synchron mit dem aufgezwungenen Ständerdrehfeld mitdrehen kann. Dies erfordert eine aufwendige Anpassung insbesondere dann, wenn die am Motor angeschlossene Massenträgheit wechselt.

Aus Patent Abstracts of Japan, Vol. 14, No. 108 (E-896), 27. Febr. 1990 (1990-02-27) - JP 01 308 192 A (Fujitsu General Ltd), 12. Dezember 1989 (1989-12-12) ist ein Verfahren zum Anfahren eines sensor- und bürstenlosen Gleichstrommotors bekannt. Dabei werden die Ständerwicklungen des Motors von einer mehrphasigen Umrichterschaltung gespeist, wobei zum Anfahren zunächst in einem Ausrichtvorgang durch gleichzeitiges Bestromen von mindestens zwei Phasen der Ständerwicklungen der Rotor in eine definierte Ausgangs- bzw. Startposition gedreht wird und dann ein in der gewünschten Drehrichtung liegender Bestromungszustand der Ständerwicklungen eingeleitet wird, woraufhin dann die weiteren Bestromungszustände der entsprechenden Phasen zyklisch folgen und der Rotor synchron mit dem aufgeschalteten Ständerfeld in Umlauf gebracht wird. Ein ähnliches Verfahren zum Anfahren eines sensor- und bürstenlosen Gleichstromotors ist aus der FR-A-2 590 423 bekannt, wobei allerdings zur Ausrichtung des Rotors nur eine Phase der Ständerwicklungen bestromt wird. Diesen Druckschriften sind keine Maßnahmen zu entnehmen, die dafür sorgen, dass der Rotor auch dann zuverlässig in seine Startposition ausgerichtet wird, wenn die Versorgungsspannung für den Motor Schwankungen unterliegt.

Die Aufgabe vorliegender Erfindung besteht in der Realisierung eines sicheren Anlaufverhaltens bei einem mehrphasigen sensor- und bürstenlosen Gleichstrommotor in einer vorgegebenen Drehrichtung und innerhalb eines gesamten, vorgegebenen zulässigen Bereichs der an der Umrichterschaltung anstehenden speisenden Gleichspannung, selbst wenn diese Schwankungen unterworfen ist.

### Vorteile der Erfindung

Das erfindungsgemäße Verfahren zum Anfahren eines sensor- und bürstenlosen Gleichstrommotors mit den Merkmalen des Anspruchs 1 hat den Vorteil, dass der Rotor in einer möglichst kurzen Zeit ohne störende Schwingungen in eine definierte Ausgangsposition gezogen wird und aus dieser Ausgangsposition heraus in der gewünschten Drehrichtung sicher und schnell anlaufen kann. Das erfindungsgemäße Verfahren ist dabei in einem großen Maße unempfindlich gegenüber Änderungen des Massenträgheitsmomentes des Rotors. Dies hat den weiteren Vorteil, dass beispielsweise in der Applikation von Gebläseanwendungen der gleiche Gleichstrommotor mit unterschiedlichen Lüftern bestückt werden kann, ohne dass dabei die Ansteuerung des Gleichstrommotors geändert werden muss. Insbesondere ist das erfindungsgemäße Verfahren robust gegen Schwankungen der Versorgungsspannung des Gleichstrommotors; d. h. der Rotor wird trotz Schwankungen der Versorgungsspannung zuverlässig in seine definierte Startposition ausgerichtet und danach sicher angefahren.

Bei dem Verfahren der Erfindung wird dabei prinzipiell zum Anfahren zunächst in einem Ausrichtvorgang durch gleichzeitiges Bestromen von mindesten zwei Phasen der Ständerwicklungen der Rotor in eine definierte Ausgangs- bzw. Startposition gedreht und dann ein in der gewünschten Drehrichtung liegender Bestromungszustand der Ständerwicklungen eingeleitet, woraufhin dann die weiteren Bestromungszustände der entsprechenden Phasen zyklisch folgen und der Rotor synchron mit dem aufgeschalteten Ständerdrehfeld in Umlauf gebracht wird. Der Strom bzw. die Pulsweite des Stromes, mit dem die mindestens zwei Phasen beim Ausrichtvorgang gespeist werden, wird entsprechend einer an der Umrichterschaltung anstehenden Eingangsgleichspannung verändert. Insbesondere wird bei niedriger Gleichspannung der Strom bzw. dessen Pulsweite erhöht und bei hoher Gleichspannung erniedrigt.

Durch die in den weiteren Ansprüchen niedergelegten Maßnahmen sind vorteilhafte Weiterbildungen und Verbesserungen des im Anspruch 1 angegebenen Verfahrens möglich.

Entsprechend einer bevorzugten, vorteilhaften Ausführungsform des erfindungsgemäßen Verfahrens wird als Bestromungszustand der übernächste Bestromungszustand der Ständerwicklungen eingeleitet.

Gemäß einer sehr zweckmäßigen und vorteilhaften Ausgestaltung und Weiterbildung des erfindungsgemäßen Verfahrens wird der Strom bzw. die Pulsweite bei Puls-Weiten-Modulation des Stromes, der beim Bestromen der zwei Phasen im Ausrichtvorgang den Phasen zugeführt wird, gemäß einer bestimmten Kurvenform, nämlich gemäß einer Rampen- oder Parabelform, erhöht.

Es ist weiterhin von Vorteil, dass das Anwendungsgebiet eines solchen Motors sehr breit ist, da er dadurch unempfindlich gegenüber Änderungen des Massenträgheitsmomentes des Rotors ist. Es können somit unterschiedliche Lasten an den Motor angehängt werden.

In weiterer vorteilhafter Ausgestaltung des erfindungsgemäßen Verfahrens wird zur Kommutierungserkennung, beispielsweise durch Nulldurchgang der induzierten Spannung der nicht bestromten Phase, jeweils eine geeignete Phase ausgewertet, insbesondere durch Erkennung der Unterschreitung einer Kommutierungsschwelle.

In weiterer vorteilhafter Ausgestaltung des erfindungsgemäßen Verfahrens ist zu dessen Steuerung und Durchführung ein Mikrocontroller vorgesehen und es wird bei Kommutierungserkennung ein Kommutierunasinterrupt ausgelöst. Durch die dadurch aufgerufene Interrupt-Routine wird die Bestromung der Ständerwicklungen auf den nächsten Bestromungszustand umgeschaltet.

In weiterer vorteilhafter Ausgestaltung dieser Ausführungsform ist vorgesehen, dass die Erhöhung der Kurvenform des Stromes bzw. der Pulsweite und/oder deren Abhängigkeit von der Eingansgleichspannung der Umrichterschaltung in einem Lesespeicher des Mikrocontrollers abgespeichert ist. Dadurch steht die einmal ermittelte Kurvenform in zweckmäßiger Weise bei jedem Anlauf entsprechend der gerade anliegenden Eingangsgleichspannung in entsprechend angepasster Form zur Verfügung.

In weiterer vorteilhafter Ausgestaltung und Anwendung des erfindungsgemäßen Verfahrens ist vorgesehen, dass dieses auf einen Außenläufermotor angewandt ist und dass in der Glocke des Außenläufermotors vorzugsweise Permanentmagnete in abwechselnder Nord-/Süd-Polung am Innenumfang vorgesehen sind. Selbstverständlich kann das erfindungsgemäße Verfahren auch für Innenläufermotoren angewandt werden.

In weiterer zweckmäßiger Anwendung des erfindungsgemäß gestalteten Verfahrens wird dieses bei einem Motor angewandt, der gleichstrommäßig von der Batterie bzw. dem Bordnetz eines Kraftfahrzeuges gespeist wird.

### Zeichnung

Das erfindungsgemäße Verfahren wird anhand eines in der Zeichnung dargestellten Ausführungsbeispieles eines sensor- und bürstenlosen Gleichstrommotors in der nachfolgenden Beschreibung näher erläutert. Dabei zeigen
- Fig. 1: schematisch das Blockschaltbild eines sensor- und bürstenlosen Gleichstrommotors mit den Endstufenschaltern einer dreisträngigen und sechspulsigen Umrichterschaltung;
- Fig. 2: das Schnittbild eines bürstenlosen Gleichstrommotors mit sechs Ständerpolen und acht Läuftermagneten in der Startposition zusammen mit den dabei bestromten Ständerwicklungen des Gleichstrommotors;
- Fig. 3: den in Fig. 2 im Schnittbild dargestellten Motor, jedoch im Zustand der Beschleunigung mit den dabei für den Anlauf bestromten Wicklungen;
- Fig. 4.: zeigt über der Zeit die Veränderung der Kurvenform des Stromes bei unterschiedlichen Eingangsgleichspannungen der Umrichterschaltung, wobei die Stromstärke I in Prozent der Puls-Weiten-Modulation angegeben ist;
- Fig. 5 Fig. 5a: zeigt drei verschiedene Diagramme, mit schematisch die Bestromungszustände der einzelnen Phasen zum einen beim Ausrichtvorgang und zum anderen beim Startvorgang und im Übergang zu den normalen sukzessiven Bestromungszuständen;
- Fig. 5b Fig. 5c: die Kommutierungsimpulse und schematisch die verschiedenen Phasen, die zur Kommutierungserkennung selektiert sind, um daraus die Kommutierungsimpulse, wie in Fig. 5b gezeigt, zu generieren.

### Beschreibung des Ausführungsbeispieles

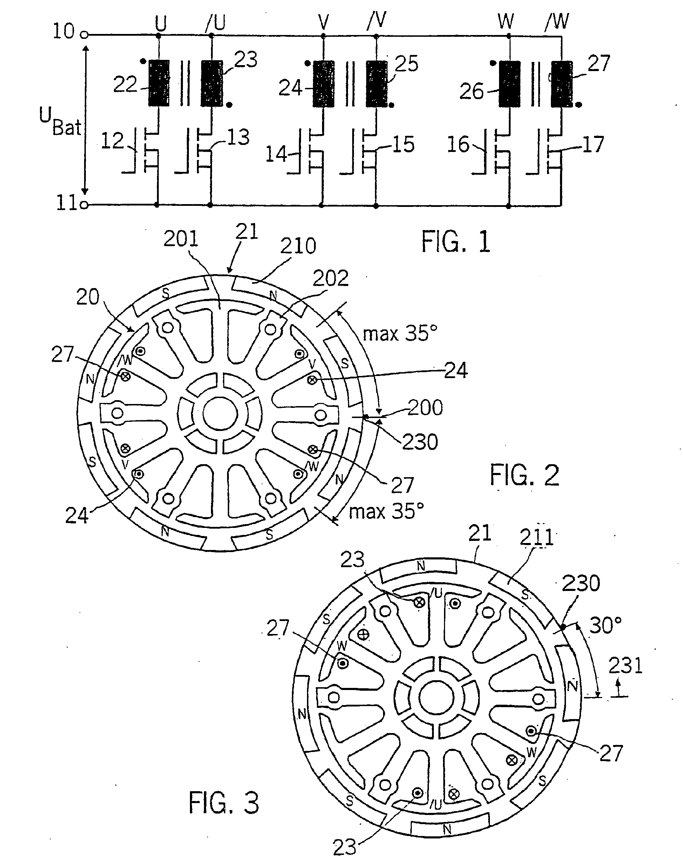

In Fig. 1 ist das Blockschaltbild oder Prinzipschaltbild zu dem Motor gezeigt, der in den Figuren 2 und 3 im Schnittbild näher dargestellt ist. Dabei steht zwischen zwei Eingangsklemmen 10 und 11 eine Gleichspannung U_{Bat} an, die beispielsweise von der Batterie oder dem Bordnetz eines Kraftfahrzeuges zur Verfügung gestellt wird. Zwischen diesen beiden Polen sind jeweils sechs Phasen U, /U, V, /V, W und /W in Parallelschaltung an die Anschlüsse 10 und 11 angeschaltet. Mit dem Schrägstrich / ist jeweils die Invertierung der zugehörigen Phase U, V oder W angezeigt. Die Phase U besteht aus einer Wicklung 22 und einem elektronischen Schalter 12 in Gestalt eines MOSFET-Transistors, der die Endstufe des Umrichters darstellt. In gleicher Aufbauweise besteht die Phase /U aus einer Wicklung 23 in Reihe mit einem Endstufentransistor 13. Die Phase V besteht aus der Wicklung 24 und dem mit dieser in Reihe geschalteten Endstufentransistor 14 und die invertierte Phase /V besteht aus der Wicklung 25 in Reihe mit dem diese schaltenden Endstufentransistor 15. In gleicher Weise ist die Phase W aus einer Wicklung 26 und dem sie schaltenden Endstufentransistor 16 aufgebaut und die invertierte Phase /W aus einer Wicklung 27 und dem diese schaltendenden Endstufentransistor 17. Bei dem in den Figuren 2 und 3 dargestellten Ausführungsbeispiel eines Motors sind für jede Phase auf jedem Ständerpol 201 zwei Wicklungen aufgebracht, die in Reihe geschaltet sind. Auf jedem Ankerkopf oder Ständerpol 201 befinden sich also jeweils zwei Wicklungen.

In den Figuren 2 und 3 ist als Ausführungsbeispiel eines sensorlosen und bürstenlosen Gleichstrommotors ein Außenläufermotor mit einem Ständer 20 und einer umlaufenden Glocke 21 dargestellt. Der Ständer 20 enthält sechs Ankerköpfe bzw. Ständerpole 201, auf denen die Wicklungen 22 bis 27 aufgebracht sind. Die Ankerköpfe 201 sind in etwa T-förmig gestaltet. Zwischen den sechs Ankerköpfen 201 sind ebenso viele flussführende Ständernasen 202 vorgesehen. Auf der Innenseite der Glocke 21 sind in abwechselnder Nord-/Süd-Polung acht Permanentmagnete 210 angeordnet, welche den drehenden Antriebsteil des Motors innerhalb der Glocke 21 bilden. Die Bestromungsrichtung der einzelnen Phasen sowie die Tatsache der Bestromung überhaupt, ist in den beiden Figuren 2 und 3 durch in Kreisen eingetragene dicke Punkte und Kreuze sowie dazwischen im jeweiligen Ständerkopf 201 eingetragene Phasenbuchstaben gekennzeichnet. Die Startposition ist in Fig. 2 mit dem Strich 200 auf der Mitte zwischen der Magnetfluss führenden Statornase zwischen den bestromten Phasen V und /W eingetragen. Zum besseren Verständnis ist an der Glocke 21 ein Punkt 230 eingetragen, der die Bewegungsrichtung 231 und die entsprechende Position der Glocke 21 während der Beschleunigungsphase des Motors zeigt. Eingetragen in Fig. 2 ist weiterhin ein Bereich von maximal 45° nach oben und nach unten jeweils in Drehrichtung und Gegendrehrichtung ausgehend von der Startposition 200. In diesem Bereich kann der dargestellte Motor in die Startposition 200 gezogen werden. Die in Fig. 3 dargestellte Position des Punktes 230 ist gegenüber der in Fig. 2 dargestellten Position um 30° verändert, d.h. die Glocke 21 hat sich in Richtung des Pfeiles 231 um 30° nach oben im Gegenuhrzeigersinn bewegt.

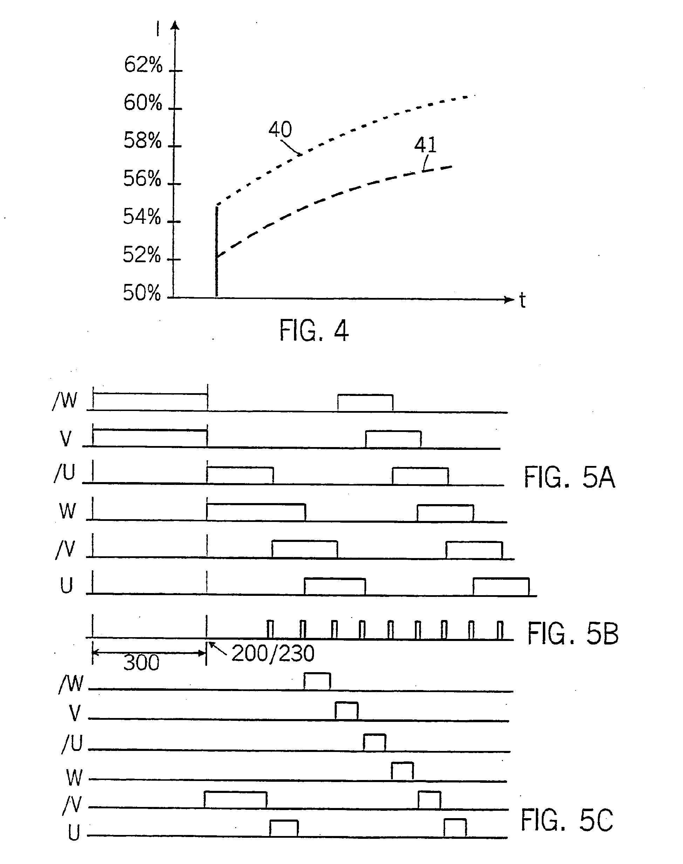

Die in den Figuren 5a bis 5c dargestellten Diagramme zeigen die verschiedenen Bestromungszutände während des Startvorganges, der sich aus einem Ausrichtvorgang 300 und dem sich ab der erreichten Startposition 200/230 anschließenden Beschleunigungsphase zusammensetzt. Die in Fig. 5a gezeigten Impulse sind jeweils die am Gate der Endstufenstransistoren 12 bis 17 anstehenden Steuerimpulse. Sie werden vorzugsweise von einem Mikrocontroller überwacht, generiert und ausgelöst. In Fig. 5b sind die Kommutierungsimpulse eingetragen, die für die Gateansteuerung der Endstufentransistoren zuständig sind, und in der Fig. 5c sind die einzelnen Impulse bei der Phasenselektion eingezeichnet, die zu den Kommutierungsimpulsen gemäß Fig. 5b und den Gateimpulsen der einzelnen Phasen in Fig. 5a gehören.

Die Fig. 4 zeigt über der Zeit t die Prozentpunkte der Pulsweitenmodulation. Die Kurvenform, mit der die Pulsweite verändert wird, beeinflusst wiederum den Strom, der den verschiedenen Wicklungen in der Ausrichtphase zugeführt wird. Die dargestellte kleingestrichelte Kurvenform 40 entspricht der Kurvenform, die beispielsweise bei der niedrigsten am Eingang 10 und 11 der Umrichterschaltung anstehenden Gleichspannung verwendet wird und die großgestrichelte Kurve entspricht der maximalen Gleichspannung U_{Bat}, die an den Anschlüssen 10 und 11 ansteht. Damit kann in vorteilhafter Weise eine Anpassung an die Eingangsgleichspannung entsprechend dem Betriebsbereich von maximaler Batteriespannung U_{Bat} von beispielsweise 16 V bis minimaler Batteriespannung von 9 V in der Weise erfolgen, dass bei niedriger Spannung, entsprechend der Kurve 40, ein höherer Strom I bzw. ein größeres Pulsweitenverhältnis angewandt wird, und bei niedrigerer Spannung, entsprechend der Kurve 41, die Stromzuführung zu den Wicklungen über der Zeit abgesenkt wird, wenn die anstehende Batteriespannung größer ist.

Entsprechend der Erfindung setzt sich das Verfahren aus zwei Phasen zusammen. Die erste Phase ist ein Ausrichtvorgang 300, durch welchen der Motor in eine Startposition 200 gedreht wird, und die zweite Phase ist ein Beschleunigungsvorgang aus der Ausricht- oder Startposition 200 heraus. Der Rotor 21 des Gleichstrommotors wird beim Ausrichten durch gleichzeitiges Bestromen von beispielsweise zwei Phasen V und /W der sechs Phasen verdreht. Dazu werden die zugehörigen Endstufentransistoren 14 und 17 mit einer definierten Pulsweite, entsprechend der in Fig. 4 dargestellten Spannungssituation, angesteuert. In Fig. 2 sind die diesem Zustand entsprechenden Stromrichtungen in das dargestellte Ausführungsbeispiel eingetragen, d.h. die Stromflussrichtung in Wicklung 24 und in Wicklung 27 ist dabei derart, dass die durch sie erzeugten Magnetflüsse in den zwischen den entsprechend bestromten Ankerköpfen liegenden Ständernasen aufgehoben werden, so dass in der Position 200 in den ausgerichteten Ständernasen 202 kein Magnetlfuss vorhanden ist. Dies wird durch die Bestromung, wie in der Fig. 5a gezeigt, der Gateimpulse /W und V erreicht. Nach einer bestimmten Zeitspanne, die empirisch ermittelbar ist, ist die in Fig. 2 dargestellte Startposition 200 erreicht. In Fig. 5b bzw. 5a ist diese Startposition mit dem Pfeil 200/230 markiert. Im weiteren zeitlichen Verlauf wird dann durch Einschaltung des Transistors 13 die Wicklung 23 der Phase /U und durch Einschalten des Endstufentransistors 16 die Wicklung 26 der Phase W entsprechend den beiden mittleren Bildern von Fig. 5a bestromt. Allgemein gesprochen, wird der in Drehrichtung liegende Bestromungszustand eingeschaltet, der genügend Drehmoment zum Anlaufen hergibt. Im dargestellten Ausführungsbeispiel ist dies der in Drehrichtung 231 liegende übernächste Bestromungszustand mit den beiden angesprochenen Phasen /U und W. Durch diese Bestromung wird der Rotor 21 aus der Startposition 200 in Fig. 2 bzw. 200/230 in Fig. 5b heraus um 30° herausbewegt, so dass der Punkt 230 auf dem Rotor 21 in Richtung des Pfeils 231 in Fig. 3 um 30° verschoben ist. Er wird also in Drehrichtung 231 beschleunigt. Entsprechend diesem Bestromungszustand sind in Fig. 3 diese entsprechenden Phasen /U mit Wicklung 23 und W mit Wicklung 27 dargestellt. Die Bestromung dieser Phasen /U und W in der dargestellten Stromrichtungsweise bewirkt also eine Verschiebung des Punktes 230 aus der Startposition 200 in die in Fig. 3 dargestellte Position. Es wird also der Rotor 21 aus der Startposition heraus in die Drehrichtung 231 beschleunigt, wie dies in Fig. 3 dargestellt ist. Zu diesem Zeitpunkt ist zur Kommutierungserkennung die Phase /V selektiert. Beim Überfahren des Statorzahnes der Phase /V mit dem Südpol 211 des Rotors 21 wird die Kommutierungsschwelle unterschritten und am Mikrocontroller ein Kommutierungsinterrupt ausgelöst. Die dadurch ausgelöste Interruptroutine schaltet die Bestromung auf den nächstfolgenden Zustand um. Ab diesem Zeitpunkt läuft dann der Rotor 21 synchron mit dem Ständerfeld um. Die dazu notwendigen Bestromungszustände und Kommutierungsimpulse sowie die Phasenselektion zur Kommutierungserkennung ist in den Diagrammen der Figuren 5a bis 5c in sukzessiver Weise und im zugehörigen zeitlichen Zusammenhang schematisch dargestellt. Die weiteren Bestromungszustände erfolgen sukzessive entsprechend der eingeleiteten Drehrichtung und der gewünschten Drehzahl.

Um beim Ausrichten ein Überschwingen des Rotors 21 über die gewünschte Startposition, mit 200 in Fig. 2 dargestellt, hinaus zu verhindern, wird der Strom I bzw. die Pulsweite bei Puls-Weiten-Modulation des Stromes, die beim Bestromen der Phasen im Ausrichtvorgang benutzt wird, und zwar der Strom mit dem die Endstufentransistoren der beiden Phasen angesteuert werden, in einer bestimmten Form, beispielsweise einer Rampenform oder einer Parabel form. Gleichzeitig kann auch entsprechend einer zweckmäßigen Ausführungsform der Erfindung eine Anpassung an die Batteriespannung U_{Bat}, wie sie an den Klemmen 10 und 11 der in Fig. 1 schematisch dargestellten Umrichterschaltung anliegt und insbesondere in einem Kraftfahrzeug vorliegt und der dortigen Bordnetzspannung entspricht, angepasst werden. Diese Anpassung ist in Fig. 4 dargestellt, wobei bei hoher Batteriespannung von beispielsweise bis zu 16 V die niedrige Kurve 41 gilt, bei welcher der Strom I bzw. die Pulsbreite entsprechend erniedrigt wird und bei niedriger Spannung entsprechend der Kurve 40, bei beispielsweise einer Batteriespannung von 9 V, der Strom I bzw. die Impulsbreite entsprechend erhöht wird. Dadurch ist sichergestellt, dass nach Ablauf einer definierten Zeitspannung der Rotor 21 in die gewünschte Startposition 200 mit seinem Startpunkt 230 hineingezogen ist, wie dies in Fig. 2 dargestellt ist.

In vorteilhafter Weise wird gemäß der Erfindung also das Anfahren in zwei Schritten vollzogen. Wobei einmal innerhalb einer möglichst kurzen Zeit der Rotor 21 ohne störende Schwingungen in eine definierte Ausgangsposition gezogen wird und dann aus dieser Position heraus in der gewünschten Drehrichtung sicher und schnell angefahren wird. Dieses Verfahren ist dabei in einem großen Maße unempfindlich gegenüber dem Massenträgheitsmoment des Rotors 21. Es ergibt sich daraus der Vorteil, dass z.B. in der Applikation von Gebläseanwendungen der gleiche Motor mit unterschiedlichen Lüftern bestückt werden kann, ohne dass dabei die Ansteuerung des Motors geändert werden muss.

## Patentansprüche

1. Verfahren zum Anfahren eines sensor- und bürstenlosen Gleichstrommotors, dessen Ständerwicklungen (22 - 27) von einer mehrphasigen Umrichterschaltung gespeiste werden, wobei zum Anfahren zunächst in einem Ausrichtvorgang durch gleichzeitiges Bestromen von mindestens zwei Phasen (V, /W) der Ständerwicklungen (22 - 27) der Rotor (21) in eine definierte Ausgangs- bzw. Startposition (200/230) gedreht wird und dann ein in der gewünschten Drehrichtung liegender Bestromungszustand der Ständerwicklungen (22 - 27) eingeleitet wird, woraufhin dann die weiteren Bestromungszustände der entsprechenden Phasen (/U, W, /V, U, /W, V) zyklisch folgen und der Rotor (21) synchron mit dem aufgeschalteten Ständerdrehfeld in Umlauf gebracht wird, **dadurch gekennzeichnet, dass** der Strom (I) bzw. die Pulsweite bei Puls-Weiten-Modulation des Stromes, der beim Bestromen der mindestens zwei Phasen (V, /W) beim Ausrichtvorgang den Phasen zugeführt wird, entsprechend einer an der Umrichterschaltung anstehenden Eingangsgleichspannung (U_{BAT}) verändert wird, insbesondere bei niedriger Gleichspannung der Strom (I) bzw. die Pulsweiten erhöht (40) und bei hoher Gleichspannung der Strom (I) bzw. die Pulsweite erniedrigt (41) wird.

2. Verfahren nach Anspruch 1, **dadurch gekennzeichnet, dass** der übernächste Bestromungszustand (/U, W) der Ständerwicklungen (22 - 27) eingeleitet wird, nachdem der Rotor (21) in die definierte Ausgangsposition (200/230) gedreht worden ist.

3. Verfahren nach Anspruch 1 oder 2, **dadurch gekennzeichnet, dass** der Strom (I) bzw. die Pulsweite bei Puls-Weiten-Modulation des Stromes, der beim Bestromen der mindestens zwei Phasen (V, /W) im Ausrichtvorgang den Phasen zugeführt wird, gemäß einer Rampen- oder Parabelform (40, 41) erhöht wird.

4. Verfahren nach einem der vorherigen Ansprüche, **dadurch gekennzeichnet, dass** zur Kommutierungserkennung, insbesondere bei Nulldurchgang der induzierten Spannung einer nicht bestromten Phase, jeweils eine geeignete Phase ausgewertet wird, insbesondere durch Erkennung der Unterscheidung einer Kommutierungsschwelle.

5. Verfahren nach einem der vorherigen Ansprüche, **dadurch gekennzeichnet, dass** zur Steuerung zur Durchführung des Verfahrens ein Mikrocontroller vorgesehen ist und dass bei Kommutierungserkennung ein Kommutierungsinterrupt ausgelöst wird, und dass durch die **dadurch** aufgerufene Interrupt-Routine die Bestromung der Ständerwicklungen auf den nächsten Bestromungszustand umschaltet.

6. Verfahren nach Anspruch 1., **dadurch gekennzeichnet, dass** die Erhöhung des Stroms (I) bzw. der Pulsweite und/oder deren Abhängigkeit von der Eingangsgleichspannung (U_{Bat}) in einem Lesespeicher des Mikrocontrollers abgespeichert ist.

7. Verfahren nach einem der vorherigen Ansprüche, **dadurch gekennzeichnet, dass** es auf einen Außenläufermotor angewandt wird und dass in der Glocke (21) des Außenläufermotors vorzugsweise Permanentmagnete (210) in abwechselnder Nord-/Süd-Polung am Innenumfang vorgesehen sind.

8. Verfahren nach einem der vorherigen Ansprüche, **dadurch gekennzeichnet, dass** es bei einem Motor angewandt wird, der gleichstrommäßig von der Batterie bzw. dem Bordnetz (10, 11) eines Kraftfahrzeugs gespeist wird.

## Claims

1. Method for starting a sensor- and brushless DC motor whose stator windings (22-27) are fed by a multiphase converter circuit, with, for starting purposes, the rotor (21) first being rotated to a defined initial or starting position (200/230) in an alignment process by simultaneously supplying current to at least two phases (V, /W) of the stator windings (22-27), and then a current-supply state, which has the desired rotation direction, of the stator windings (22-27) being initiated, this then being followed cyclically by the further current-supply states of the corresponding phases (/U, W, /V, U, /W, V), and the rotor (21) being rotated synchronously with the applied rotating stator field, **characterized in that** the current (I) or the pulse width in the case of pulse-width modulation of the current, which current is supplied to the phases during the alignment process when current is supplied to the at least two phases (V, /W), is changed in accordance with an input DC voltage (U_{BAT}) which is applied to the converter circuit, in particular the current (I) or the pulse width is increased (40) in the case of a low DC voltage and the current (I) or the pulse width is reduced (41) in the case of a high DC voltage.

2. Method according to Claim 1, **characterized in that** the next-but-one current-supply state (/U, W) of the stator windings (22-27) is initiated after the rotor (21) has been rotated to the defined initial position (200/230).

3. Method according to Claim 1 or 2, **characterized in that** the current (I) or the pulse width in the case of pulse-width modulation of the current, which current is supplied to the phases during the alignment process when current is supplied to the at least two phases (V, /W), is increased in accordance with a ramp or parabolic shape (40, 41).

4. Method according to one of the preceding claims, **characterized in that** in each case one suitable phase is evaluated, in particular by identifying the difference from a commutation threshold, for the purpose of identifying commutation, in particular at the zero crossing of the induced voltage of a phase to which current is not supplied.

5. Method according to one of the preceding claims, **characterized in that** a microcontroller is provided for controlling the execution of the method, and **in that** a commutation interrupt is triggered when commutation is identified, and **in that** the supply of current to the stator windings is changed over to the next current-supply state by the interrupt routine called up as a result of the said commutation interrupt.

6. Method according to Claim 1, **characterized in that** the increase in the current (I) or the pulse width and/or their dependence on the input DC voltage (U_{BAT}) is stored in a read memory of the microcontroller.

7. Method according to one of the preceding claims, **characterized in that** it is applied to an external-rotor motor, and **in that** permanent magnets (210) are preferably provided in the bell (21) of the external-rotor motor with an alternating north/south polarity on the inner circumference.

8. Method according to one of the preceding claims, **characterized in that** it is applied in a motor which is fed with DC current by the battery and/or the on-board power supply system (10, 11) of a motor vehicle.

## Revendications

1. Procédé pour démarrer un moteur à courant continu sans détecteur ni balai, dont les enroulements de stator (22-27) sont alimentés à partir d'un circuit onduleur polyphasé,
et pour démarrer, on tourne tout d'abord au cours d'une opération d'alignement par une alimentation simultanée d'au moins deux phases (v,/w) des enroulements de stator (22-27), le rotor (21) dans une position de sortie ou position de départ définie (200/230) et ensuite on assure un état d'alimentation des enroulements de stator (22-27) correspondant au sens de rotation souhaité, puis les différents états d'alimentation des phases correspondantes (/u, w, /v, u, /w, v) se suivent de manière cyclique et le rotor (21) est mis en synchronisme avec le champ tournant du stator qui est appliqué,
**caractérisé en ce que**
l'on établit le courant (I) ou la largeur d'impulsion dans le cas d'un courant à modulation de largeur d'impulsion, pour assurer l'alimentation d'au moins deux phases (v, /w) au cours de l'opération d'alignement des phases, en modifiant selon une tension continue d'entrée (U_{BAT}) appliquée au circuit onduleur, notamment pour une tension continue basse on augmente l'intensité (I) ou la largeur d'impulsion (40) et pour une tension continue élevée, on diminue l'intensité (I) ou la largeur d'impulsion (41).

2. Procédé selon la revendication 1,
**caractérisé en ce qu'**
on assure le second état d'alimentation suivant (/u, w) des enroulements de stator (22-27) une fois que le rotor (21) est dans la position de sortie définie (200/230).

3. Procédé selon la revendication 1 ou 2,
**caractérisé en ce que**
l'on augmente selon une forme de rampe ou de parabole (40,41) l'intensité (I) ou la largeur d'impulsion pour une modulation en largeur d'impulsion du courant fourni pour l'alimentation d'au moins deux phases (v, /w) dans l'opération d'alignement des phases.

4. Procédé selon l'une des revendications précédentes,
**caractérisé en ce que**
pour détecter la commutation, notamment par le passage à zéro de la tension induite d'une phase non alimentée, on exploite chaque fois une phase appropriée, notamment par détection du passage sous un seuil de commutation.

5. Procédé selon l'une des revendications précédentes,
**caractérisé par**
un microcontrôleur pour commander l'exécution du procédé et en ce que pour la détection de la commutation, on déclenche une interruption de commutation et en ce que par la routine d'interruption ainsi appelée, on commute l'alimentation des enroulements de stator sur l'état d'alimentation suivant.

6. Procédé selon la revendication 1,
**caractérisé en ce qu'**
on enregistre en mémoire l'augmentation de l'intensité (I) ou de la largeur d'impulsion et/ou de sa dépendance par rapport à la tension continue d'entrée (U_{BAT}) dans une mémoire de lecture du microcontrôleur.

7. Procédé selon l'une des revendications précédentes,
**caractérisé en ce qu'**
il est appliqué à un moteur à rotor extérieur et la cloche (21) du moteur à rotor extérieur, comporte de préférence des aimants permanents (210) répartis sur la périphérie intérieure suivant une polarité alternée Nord-Sud.

8. Procédé selon l'une des revendications précédentes,
**caractérisé en ce qu'**
il est appliqué à un moteur alimenté en courant continu à partir de la batterie ou du réseau embarqué (10, 11) d'un véhicule automobile.
